Europäisches Patentamt

European Patent Office

Office européen des brevets

(19)

(11) Publication number : **0 399 580 B1**

(12) **EUROPEAN PATENT SPECIFICATION**

(45) Date of publication of patent specification :
12.01.94 Bulletin 94/02

(51) Int. Cl.⁵ : **A23C 15/16**

(21) Application number : **90200964.6**

(22) Date of filing : **19.04.90**

(54) **Low shear phase-inversion process and products thereof.**

(30) Priority : **28.04.89 GB 8909802**

(43) Date of publication of application :
**28.11.90 Bulletin 90/48**

(45) Publication of the grant of the patent :
**12.01.94 Bulletin 94/02**

(84) Designated Contracting States :
**AT BE CH DE DK ES FR GB GR IT LI NL SE**

(56) References cited :
**EP-A- 0 098 663
EP-A- 0 169 617
EP-A- 0 199 397
US-A- 4 307 125
THE JOURNAL OF THE AMERICAN OIL
CHEMISTS' SOCIETY vol. 36, no. 1, January
1959, CHICAGO, ILLINOIS, USA pages 345 -
348; A.J.HAIGHTON: "THE MEASUREMENT
OF THE HARDNESS OF MARGARINE AND
FATS WHITH CONE PENETROMETERS"**

(73) Proprietor : **UNILEVER N.V.
Weena 455
NL-3013 AL Rotterdam (NL)**
(84) **BE CH DE DK ES FR GR IT LI NL SE AT**
Proprietor : **UNILEVER PLC
Unilever House Blackfriars P.O. Box 68
London EC4P 4BQ (GB)**
(84) **GB**

(72) Inventor : **Cain, Frederick William
Dr. Blookerstraat 12
NL-2271 VL Voorburg (NL)**
Inventor : **de Wit, Jim
Gunterstein 7
NL-3334 CH Zwijndrecht (NL)**

(74) Representative : **Mulder, Cornelis Willem
Reinier, Dr. et al
UNILEVER N.V. Patent Division P.O. Box 137
NL-3130 AC Vlaardingen (NL)**

## Description

The present invention relates to a low shear inversion process for the production of dairy spreads and the products thereof.

Creams are emulsions of the oil-in-water type, and are well known both as starting materials and intermediates in methods for the production of edible spreads, including butter and margarine. In such methods the dispersed fat phase of the cream is converted into a continuous partially crystallised, fat phase in which a dispersed aqueous phase is present. Such products may be characterised by their relatively low electrical conductivity. It is important that these products are fat continuous in order to avoid microbiological problems.

With dairy cream, particularly in conventional butter-making, this conversion has been accomplished by the well-established method of cooling and working the cream in a churn. Examples of many types of churning process and apparatus are well known to the man skilled in the art.

EP 0 098 663 discloses a process for the preparation of a reduced fat spread under conditions of shear-churning of a 25-65 wt.% fat containing cream, wherein at least part of the fat is crystallised. The process uses incomplete phase inversion so that a product results with both an encapsulated and a continuous water phase.

US 4,307,125 deals with a process for the preparation of low fat butter-like spreads by subjecting a 35-60 wt.% fat containing homogenised cream, which further contains an emulsifier and a minor amount of a hydrocolloid, to high shear phase inversion.

During churning partial phase separation occurs with loss of much of the aqueous phase as buttermilk and a concentration of the dairy fat phase in the butter mass. A vast body of literature is concerned with the process conditions and physical changes which subsist during this process.

Butter obtained from the churn has desirable mechanical properties as regards spreadability and elasticity over a relatively narrow temperature range; much research has concerned how this range can be extended.

While butter contains around 80% fat, in recent years so-called "reduced fat butters" have enjoyed increasing popularity. These products, as the name suggests, comprise less than 80% fat. One major problem with reduced fat butters is that they lack the mechanical properties of butter. Moreover, these reduced fat products are difficult to make by a churning process.

The alternative to churning in the spreads industry is the so-called "Votator" (RTM) process, in which high shear mixers are employed. Such processes do not generally result in a butter-like product, and require complex and expensive equipment for their performance. In particular the Votator "A-unit" or scraped surface heat exchanger, employs a supply of liquid ammonia for cooling and therefore requires expensive refrigeration plant and control gear.

Much research has concerned how butter-like margarine can be made. More recently, there has been some effort devoted to the manufacture of butter-like products with a reduced amount of fat.

In a previous method for the manufacture of a 40% fat product, preparation involved ripening a dairy cream for 16 h at 10°C. During this process the cream crystallised and the resulting o/w emulsion contained many granules. This o/w emulsion was then inverted in a low-shear mixer of the "cavity transfer mixer" type. The low shear conditions that are employed are understood to relate to a shear output low enough to ensure that the resulting products contain many intact granules. The cavity transfer mixer is a suitable low shear mixer for that purpose, in contrast to the high shear mixers of the Votator™ type. However, a drawback of this approach was that high levels of sodium caseinate (approx.7% on product) had to be added in order to achieve a stable inversion of the product. The final products were plastic but had a cheese spread-like texture and were "thick" in the mouth.

It is an object of the present invention to provide a reduced fat butter which is butter-like without being cheese-spread like. In particular, the invention aims to provide a 55-65% butter-fat based spread with a butter-like texture using a simple process of low shear inversion. The additional problems faced include avoiding the high levels of caseinate previously found necessary for inversion and avoiding the costly 16 hr ripening step previously required.

We have now identified a process for the preparation of a reduced fat butter which has a good butter-like texture by inversion of a concentrated cream in the form of a partially crystallised viscous paste.

Accordingly one aspect of the present invention comprises a process for the preparation of a reduced fat butter spread comprising 55-65%wt butterfat, by phase inversion under conditions of low shear of a cream comprising from 55-65%wt butterfat and 35-45%wt of a gelled or thickened aqueous phase, wherein the cream is in the form of a partially crystallised viscous paste and wherein the C value of said paste at 20°C lies between 50 and 1500.

It is thought that in the method of the present invention the production of a paste is a necessary requirement for the preparation of a spread with a butter-like texture.

Accordingly a second aspect of the present invention comprises a viscous butterfat containing paste comprising 55-65%wt of butterfat and 35-45%wt of a gelled or thickened aqueous phase wherein the C-value at a temperature of 20°C lies in the range 50-1500.

Phase inversion of the paste may conveniently be performed in a so-called "cavity transfer mixer". Such a mixer comprising a pair of closely spaced, relatively movable surfaces having a plurality of blind openings therein is described in EP 199397.

Typically, to produce a spread with a good butter-like texture, the C values of the paste, measured at 20°C should be between 300 and 900 and it is most preferable that the C-value lies between 600 and 800.

Optionally the cream is cooled directly from a Pasteurisation temperature of above 50°C to below 25°C prior to inversion.

Surprisingly, a 60% fat cream comprising 3% caseinate and 1% gelatin could be cooled directly from approximately 55°C to 20°C at which temperature it forms a paste, and processed. A 16 h ripening step was not necessary to make a product with a good butter-like texture.

Preferred embodiments of the invention received scores from an expert panel similar to those obtained with a moderate butter. In comparative tests between products according to the present invention and products of an identical formula made by a conventional "Votator" route it was observed that "Votator" lacked butter-like texture and consequently received low scores.

The comparative tests are carried out by a group of experts who assess the butter-like texture of the spreads in terms of absolute attributes such as plasticity, fracture and toughness.

Products comprising around 60% fat have not previously scored as high in comparison to butter. Applicants have attempted to determine the microstructural features of the product which are expressed in the test mentioned below, but have been unable to identify specific microstructural features which explain all of the results.

The plasticity was measured by pushing a pencil-like rod into the product. A collar of material was formed around the rod. The height of the collar was assessed on a five point scale: 1=low plasticity, 5=high plasticity. Typical margarines form high collars and receive scores between 1 and 3, whereas butter scores of 4 or 5.

The fracture was determined by first breaking the product and then evaluating the texture of the broken surface. A five point scale was used to characterise the broken surface:

   1. crumbly     2. shell shaped    3. smooth

   4. finely granular    5. coarsely granular

Butter has a finely granular structure whereas margarines are smooth. Scores of 1,2 and 5 indicate product defects.

Toughness was assessed during spreading. Product was spread on fat free paper and deformation after working with a knife was expressed on a 5 point scale:

   1. fast and rapid softening    2. strong softening

   3. moderate softening    4. tough    5. very tough

Butter is relatively tough and receives a high score in the test (4 or 5). Margarines lose toughness when spread and get low scores (1-3).

In addition the panel gave an overall score for butter-like texture. This score was based on a scale of 1 to 10. The scale was:

   1. very poor margarine

   2. poor margarine

   3. butterlikeness of normal margarine

   4. butterlikeness of good margarine

   5. butterlikeness of very good margarine

   6. butter-like but something missing

   7. some butter-like properties

   8. butterlikeness of moderate butter

   9. butterlikeness of good butter

   10. butterlikeness of excellent butter

In a preferred embodiment of the present invention the aqueous phase of the paste or spread is gelled or thickened with a gelling or thickening agent selected from the group comprising milk-proteins, gelatine and combinations of gelatine and milk protein.

It should be noted that although thickeners did not have to be added to the cream to produce fat continuous spreads, it is preferred that moderate levels of thickener (more than 4% caseinate on product or 3% caseinate and 1% gelatin) should be employed. Spreads with lower levels (less than 3% caseinate or 2% caseinate and 0.5% gelatin) are still stable but are less preferable: while these products have high plasticity scores they suffer from water loss on spreading, have a poor fracture surface and a low toughness.

It is considered important that the aqueous phase of products according to the present invention has a viscosity higher than that of a 9% caseinate solution at a pH of 5-6 to avoid loose moisture on spreading.

While the invention has been described with reference to butterfat it is envisaged that a proportion of the butterfat can be replaced by a suitable butterfat replacer, in particular by a sucrose fatty acid ester having physical properties similar to those of butterfat. The term "butterfat" as used herein is intended to embrace butterfat, butterfat replacers and mixtures of butterfat with butterfat replacers.

In order that the invention might be better understood the following illustrative examples are given, and refer to the single accompanying figure which shows a plant for the performance of the invention. The following composition was used as the basis of the examples;

|  | %wt |
|---|---|
| Dairy cream (conc to 60% fat) | 72.00 |
| Butterfat (anhydrous) | 22.00 |
| Monoglyceride | 0.20 |
| Lecithin | 0.20 |
| Salt | 0.40 |
| Potassium sorbate | 0.13 |
| pH to 5.2 with lactic/citric acids 4:1 | |
| Thickener | to required level |
| Water | to 100 |

The 60% dairy cream may conveniently be prepared by heating fresh dairy cream (40% fat) to 60°C and then concentrating the cream to approximately 60% fat in a laboratory scale centrifuge. An Alfa Laval Model 100AE centrifuge operating at a speed of 3000 rpm will suffice. Alternatively, 60% dairy cream may be obtained in the marketplace.

The general method employed is as follows:

a) Preparation of Cream:

In each of examples the concentrated cream is reheated to 60°C. The salt, sorbate and gelatine (where used) are added to the water at 80°C. This aqueous phase is mixed into the cream. Separately, monoglyceride (Hymono 8903) and lecithin (Bolec ZTD) are added to butterfat which has been heated to 70°C. The sodium caseinate is carefully suspended in the butterfat using an Ultra Turrax mixer. This fat phase is slowly emulsified into the cream and aqueous phase again using an Ultra Turrax mixer to obtain an o/w emulsion at a temperature of approximately 55°C. The pH is generally in the range 6-6.5. This is conveniently reduced to 5.2 with a 4:1 mixture of lactic and citric acids. The cream is stored before use in a water-jacketed pre-mix tank, at 55°C.

b) Ripening of Cream:

The cream prepared according to the above mentioned step (a) is preferably physically ripened. Two basic procedures can be employed for the ripening.

In the first ripening procedure: the cream was cooled from 55°C to 10°C and held at 10°C for the required period of time. The cooled cream was placed in a premix vessel at around 20°C and processed immediately after equilibration to the vessel temperature.

In the second ripening procedure the cream was cooled rapidly from 55°C and held at 20°C for the required period of time. The ripening conditions that were employed are discussed below.

The result of the ripening procedure was a paste-like material. Two empirical tests have been developed for assessing whether the paste was suitable for processing.

The first test measures the viscosity using a Ford viscosity cup (type FB 11). This cup was made of light alloy and had a fixed stainless steel nozzle (no. 4). An aliquot of the concentrated cream is cooled from 55°C to 20°C. 100 ml of the cooled cream were then placed in the viscosity cup. The amount of cream that flowed out in 2.5 minutes is measured using a measuring cylinder. If less than 20 ml, or preferably, less than 5 ml of material flows into the measuring cylinder the paste is suitable for processing.

In the second test the C values of the paste is measured. To perform this test approx 100 ml of the concentrated cream is cooled from 55°C to 20°C and the C values measured using the standard procedure at 20°C.

Pastes with a C-values of less than 50 are difficult to invert at low shear and do not give products with a butter-like texture. Pastes with C-values in excess of 1500 are difficult to handle without special equipment due to their high viscosity.

The best products were obtained at C-values of around 600-700 at 20°C.

c) Product Preparation:

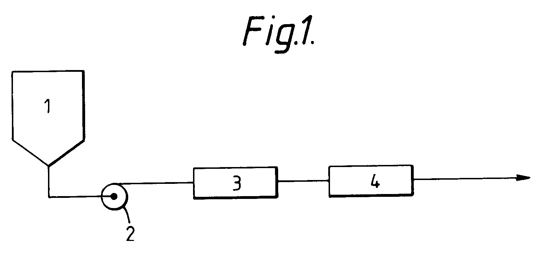

The process line is shown in Fig 1. The ripened paste is pumped, by means of pump (2) from premix vessel (1) under a pressure of 5 bar to and through cavity transfer mixer (3).

Cavity transfer mixer (3) has a shaft diameter of 2.8 cm, shaft height of 24.3 cm. and a 'hole' diameter of 1.3 cm. The volume is 80 ml. The jacket temperature of the cavity transfer mixer is 1.0°C. It is operated at a speed of 150 rpm. The product exit temperature is in the range 10-12°C and the percentage solids is in the range 14-16%.

A "VOTATOR" (RTM) B-unit (4) is located downstream of the cavity transfer mixer.

EXAMPLES 1-8:

Products were prepared with a simple thickener system comprising sodium caseinate. Samples were ripened for 16 h at 10°C, otherwise processing was as given in the general method outlined above. The level of sodium caseinate was varied from 6.7% on product to 0.0%. Products were obtained with the following properties:

TABLE 1:

EXAMPLE NO:

| | 1 | 2 | 3 | 4 | 5 | 6 | 7 | 8 |
|---|---|---|---|---|---|---|---|---|
| **% Sodium Caseinate** | | | | | | | | |
| | 6.7 | 6.0 | 5.0 | 4.0 | 3.0 | 2.0 | 1.0 | 0.0 |
| C5 | 2450 | 2000 | 2450 | 2300 | 2600 | 2200 | 2350 | 1950 |
| C10 | 1800 | 1360 | 1600 | 1500 | 1750 | 1390 | 1550 | 1490 |
| C15 | 790 | 570 | 760 | 730 | 850 | 570 | 720 | 690 |
| C20 | 145 | 135 | 150 | 145 | 150 | 150 | 150 | 90 |
| **Salt release T100 (°C)** | | | | | | | | |
| | 34.0 | 33.7 | 33.7 | 34.0 | 34.7 | 33.9 | 34.1 | 34.4 |
| **Plasticity** | | | | | | | | |
| | 4.8 | 5.0 | 5.0 | 4.8 | 4.8 | 4.5 | 4.0 | 4.0 |
| **Fracture** | | | | | | | | |
| | 3.4 | 3.8 | 3.5 | 3.0 | 3.8 | 2.0 | 1.5 | 1.5 |
| **Toughness** | | | | | | | | |
| | 2.8 | 3.5 | 3.5 | 3.0 | 2.3 | 2.5 | 2.5 | 2.0 |
| **Final Butter Score** | | | | | | | | |
| | 7.5 | 8.1 | 8.1 | 7.3 | 6.3 | 4.8* | 4.4* | 4.1* |

\* Denotes loose moisture on spreading

The spreads had similar physical properties. All had low conductivities and this feature taken together with the salt release figures indicates that the products were therefore fat continuous. Thus, for 65% fat spreads, high levels of sodium caseinate on product were not required in order to achieve inversion by the method of the present invention. The salt release T100% values were in the range 33.5°C to 34.7°C. The samples were relatively hard; the C5 range being from 1950 to 2600.

The results indicate that the butterlikeness score decreased as the level of caseinate decreased. Products with 4% and more caseinate on product received scores in the range 7 to 8, similar to the texture of a moderate butter. Examples with 2% or less caseinate on product scored 4 to 5, similar to those of good margarines. The sample with 3% caseinate on product fell in between the two groups with a score of 6.3 and had some butter-like characteristics but was not of the same standard as a conventional butter.

The decrease in final score with decreasing caseinate level was not due to a loss of plasticity as all the products had high plasticity scores (4-5). Products with 2% and less caseinate on product exhibited loose moisture after spreading and in addition, these products had less acceptable fracture surface and toughness scores.

The products containing 6.7%, 4.0% and 0.0% caseinate were examined by light microscopy. The three products were found to contain large numbers of intact fat granules. The results also show that the presence of granules alone was not enough to ensure that a sample received a high butter-like texture score.

It is believed that the relatively high level of thickening agent overcame problems such as poor fracture surface, loss of toughness and water loss on spreading. Surprisingly, even with the high levels of thickener, the 65% fat spreads did not have the cheese spread-like consistency of the 40% fat products that were previously made by low shear inversion.

EXAMPLES 9-13

EXAMPLES 9-13

TABLE 2

| EXAMPLE No | 9 | 10 | 11 | 12 | 13 |
|---|---|---|---|---|---|
| Physical % gelatin | 0.3 | 0.5 | 1.0 | 1.0 | 1.0 |
| Props % casein | 2.0 | 2.0 | 2.0 | 1.0 | 0.0 |
| C5 | 1975 | 2000 | 2300 | 2100 | 2320 |
| C10 | 1180 | 1430 | 1250 | 1670 | 1380 |
| C15 | 560 | 660 | 770 | 700 | 680 |
| C20 | 130 | 120 | 130 | 120 | 120 |
| Salt rel T100% (°C) | 33.7 | 34.1 | 33.4 | 34.0 | 34.2 |
| Plasticity | 4.7 | 4.3 | 4.2 | 4.5 | 4.0 |
| Fracture | 3.0 | 2.5 | 3.2 | 3.0 | 3.0 |
| Structure | 2.2 | 2.8 | 2.5 | 2.8 | 2.8 |
| Final | 5.0* | 6.5* | 5.7 | 7.1 | 6.5* |

* Denotes loose moisture on spreading

Table 2 shows that all of the products had similar physical properties irrespective of the level of caseinate or gelatin that was added. The products were also similar to those described in section 3.1. The conductivities showed that they were fat continuous, the salt release T100% was in the range 33.4°C to 34.2°C confirming the fat continuous nature of the products and the C5 values were between 1975 and 2330. Final butter-likeness scores were between 5.0 and 7.0. They were thus slightly lower than those obtained by products with high (>4% on product) levels of caseinate. As in the previous experiments, all of the products had high plasticity scores,which illustrated the important influence of thickener type and level on butter-like texture. However, in these experiments there was no systematic trend between final butterlikeness score and concentration of aqueous phase thickeners.

EXAMPLES 14-18:

As mentioned above, products described in examples 1-13 were prepared using a ripening time of 16 h and were processed at a temperature of 20°C. Examples 14-18 use a formulation of 3% sodium caseinate.1% gelatin and 60% fat. These products were made with 58% of a 66% fat cream and 21.2% of butterfat. The other ingredients were as the general formulation.

TABLE 3

| Example No | 14 | 15 | 16 | 17 | 18 |
|---|---|---|---|---|---|
| Physical | Ripening Conditions | | | | |
| Properties | A | B | C | D | E |
| | | | | | |
| C5 | 1750 | 1040 | 1370 | 1040 | 1900 |
| C10 | 1130 | 620 | 875 | 785 | 745 |
| C15 | 635 | 375 | 340 | 335 | 220 |
| C20 | 110 | 100 | 55 | 60 | 95 |
| | | | | | |
| Salt rel T100%(°C) | | | | | |
| | 33.3 | 34.5 | 32,8 | 31.7 | - |
| | | | | | |
| Plasticity | 4.7 | 5.0 | 4.7 | 5.0 | 4.3 |
| Fracture | 2.5 | 3.8 | 3.0 | 3.2 | 3.3 |
| Toughness | 3.2 | 3.5 | 3.2 | 4.0 | 3.8 |
| Final | 7.8 | 8.5 | 8.3 | 8.6 | 8.0 |

Ripening Conditions for Table 3

A 10°C for 16 hr    heating 10°C to 20°C - 2 hr

B 10°C for 12 hr    heating 10°C to 20°C - 2 hr

C 20°C for 16 hr

D 20°C for 12 hr

E 20°C for  0 hr (cooled directly after Pasteurisation)

It can be seen from the salt release figures in table 3 that the products of examples 14-18 were fat continuous, this is confirmed by conductivity measurements. There was more variation in the salt release T100% and C values than in the previous examples. The range of salt release T100% was from 31.7°C to 34.5°C and C5 values were between 1040 and 1900. No systematic trend related these properties to ripening conditions: samples C,D and E held at 20°C for 16 h were harder at 5°C than those held for 12 h but softer than those held for 0 h.

All of the products had butter-like texture scores between 7.8 and 8.6; similar to moderate/good butters. Neither the ripening procedure nor the slight decrease in fat level appeared to be important. Indeed the reference product (A) which was held at 10°C for 16 h received the lowest final texture score. The products were also plastic having plasticity scores in the range 4 to 5.

## Claims

1.    A process for the preparation of a reduced fat butter comprising from 55-65%wt of butterfat by phase inversion under conditions of low shear of a cream comprising from 55-65%wt of butterfat and 35-45%wt of a gelled or thickened aqueous phase, wherein the cream is in the form of a partially crystallised viscous paste and wherein the C-value of said paste at 20°C lies between 50 and 1500.

2. A process according to claim 1 wherein the C-value of the paste at 20°C lies between 300 and 900.

3. A process according to claim 2 wherein the C-value of the paste at 20°C lies between 500 and 800.

4. A process according to claims 1, 2 or 3 wherein the cream is cooled directly from above 50°C to below 25°C immediately prior to phase inversion.

5. A cream in the form of a viscous butterfat containing paste comprising from 55-65%wt of butterfat and from 35-45%wt of a gelled or thickened aqueous phase wherein the C-value at a temperature of 20°C lies in the range 50-1000, preferably 600-800.

6. A cream in the form of a viscous butterfat containing paste comprising from 55-65%wt of butterfat and from 35-45% of a gelled or thickened aqueous phase wherein at 20°C less than 20 ml of a 100 ml sample of the paste is discharged from a Ford viscosity cup type FB 11 having a fixed stainless steel nozzle No 4. in 2.5 minutes.

7. A paste according to claim 5 or claim 6 wherein the aqueous phase is gelled or thickened with a gelling or thickening agent selected from the group comprising milk-proteins, gelatine and combinations of gelatine and milk protein.

8. A paste according to claim 5 or claim 6 wherein the aqueous phase viscosity is greater than that of a 9% solution of sodium caseinate in water as measured under identical conditions at 20°C and in a pH range of 5-6.

**Patentansprüche**

1. Verfahren zur Herstellung von Butter mit einem reduzierten Fettgehalt, umfassend 55 bis 65 Gew.-% Butterfett, durch Phasenumkehrung unter Bedingungen geringer Scherkraft eines Rahms, der 55 bis 65 Gew.-% Butterfett und 35 bis 45 Gew.-% einer gelierten oder verdickten wäßrigen Phase umfaßt, wobei der Rahm in Form einer partiell kristallisierten viskosen Paste vorliegt und der C-Wert der Paste bei 20°C zwischen 50 und 1500 liegt.

2. Verfahren nach Anspruch 1, dadurch gekennzeichnet, daß der C-Wert der Paste bei 20°C zwischen 300 und 900 liegt.

3. Verfahren nach Anspruch 2, dadurch gekennzeichnet, daß der C-Wert der Paste bei 20°C zwischen 500 und 800 liegt.

4. Verfahren nach den Ansprüchen 1, 2 oder 3, dadurch gekennzeichnet, daß der Rahm unmittelbar vor der Phasenumkehrung direkt von über 50°C auf unter 25°C gekühlt wird.

5. Rahm in Form einer viskoses Butterfett enthaltenden Paste, umfassend 55 bis 65 Gew.-% Butterfett und 35 bis 45 Gew.-% einer gelierten oder verdickten wäßrigen Phase, wobei der C-Wert bei einer Temperatur von 20°C im Bereich von 50 bis 1000, vorzugsweise 600 bis 800, liegt.

6. Rahm in Form einer viskoses Butterfett enthaltenden Paste, umfassend 55 bis 65 Gew.-% Butterfett und 35 bis 45 Gew.-% einer gelierten oder verdickten wäßrigen Phase, wobei bei 20°C in 2,5 min weniger als 20 ml einer 100 ml- Probe der Paste aus einem Ford Viskositätsbecher Typ FB 11 mit einer daran befestigten Düse aus rostfreiem Stahl Nr. 4 ausfließen.

7. Paste nach Anspruch 5 oder 6, dadurch gekennzeichnet, daß die wäßrige Phase mit einem Gelier- oder Verdickungsmittel, ausgewählt aus der Gruppe, umfassend Milchproteine, Gelatine und Kombinationen von Gelatine und Milchprotein, geliert oder verdickt ist.

8. Paste nach den Ansprüchen 5 oder 6, dadurch gekennzeichnet, daß die wäßrige Phase eine Viskosität besitzt, die größer ist als die einer 9%igen Lösung von Natriumkaseinat in Wasser, gemessen unter identischen Bedingungen bei 20°C und in einem pH-Bereich von 5 bis 6.

**Revendications**

1. Procédé de préparation d'un beurre à teneur en graisse réduite comprenant de 55 à 65% en poids d'une graisse de beurre par inversion de phases dans des conditions de faible cisaillement d'une crème comprenant de 55 à 65% en poids de graisse de beurre et de 35 à 45% en poids de phase aqueuse gélifiée ou épaissie, dans lequel la crème est sous forme d'une pâte visqueuse partiellement cristallisée et dans lequel la valeur C de ladite pâte à 20°C est comprise entre 50 et 1500.

2. Procédé selon la revendication 1, dans lequel la valeur C de la pâte à 20°C est comprise entre 300 et 900.

3. Procédé selon la revendication 2, dans lequel la valeur C de la pâte à 20°C est comprise entre 500 et 800.

4. Procédé selon la revendication 1, 2 ou 3, dans lequel on refroidit la crème directement à partir d'une température supérieure à 50°C à une température inférieure à 25°C immédiatement avant l'inversion de phases.

5. Crème sous forme d'une pâte contenant une graisse de beurre visqueuse qui comprend de 55 à 65% en poids de graisse de beurre et de 35 à 45% en poids d'une phase aqueuse gélifiée ou épaissie, dans laquelle la valeur C à une température de 20°C est comprise entre 50 et 1000, de préférence entre 600 et 800.

6. Crème sous forme d'une pâte contenant une graisse de beurre visqueuse qui comprend de 55 à 65% en poids de graisse de beurre et de 35 à 45% d'une phase aqueuse gélifiée ou épaissie, dans laquelle, à 20°C, une quantité inférieure à 20 ml d'un échantillon de 100 ml de pâte est déchargée d'une coupelle de viscosité Ford du type FB 11 comportant un ajutage fixe en acier inoxydable N°4, en 2,5 minutes.

7. Pâte selon la revendication 5 ou 6, dans laquelle la phase aqueuse est gélifiée ou épaissie à l'aide d'un agent gélifiant ou épaississant choisi parmi les protéines de lait, la gélatine et des combinaisons de gélatine et de protéines de lait.

8. Pâte selon la revendication 5 ou 6, dans laquelle la viscosité de la phase aqueuse est supérieure à celle d'une solution à 9% de caséinate de sodium dans l'eau mesurée dans des conditions identiques à 20°C et à un pH de 5 à 6.

Fig.1.